(19) Europäisches Patentamt
European Patent Office
Office européen des brevets

(11) EP 4 462 497 A1

(12) EUROPEAN PATENT APPLICATION

(43) Date of publication:
**13.11.2024 Bulletin 2024/46**

(21) Application number: **24161592.1**

(22) Date of filing: **05.03.2024**

(51) International Patent Classification (IPC):
***H01M 4/13*** (2010.01) ***H01M 4/36*** (2006.01)
***H01M 4/62*** (2006.01) ***H01M 10/0525*** (2010.01)
*H01M 4/38* (2006.01) *H01M 4/587* (2010.01)

(52) Cooperative Patent Classification (CPC):
**H01M 4/364; H01M 4/13; H01M 4/622;**
H01M 4/386; H01M 4/587; H01M 10/0525

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.05.2023 KR 20230060640**

(71) Applicant: **Samsung SDI Co., Ltd.**
**Yongin-si, Gyeonggi-do 17084 (KR)**

(72) Inventors:
- **LEE, Junkyu**
  **17084 Yongin-si (KR)**
- **LEE, Donghun**
  **17084 Yongin-si (KR)**
- **EOM, Hyeri**
  **17084 Yongin-si (KR)**
- **DO, Uisong**
  **17084 Yongin-si (KR)**
- **CHAE, Wonhyung**
  **17084 Yongin-si (KR)**
- **IN, Jinhyuk**
  **17084 Yongin-si (KR)**
- **JEONG, Min-young**
  **17084 Yongin-si (KR)**
- **JUNG, Kyunghwa**
  **17084 Yongin-si (KR)**

(74) Representative: **Marks & Clerk LLP**
**15 Fetter Lane**
**London EC4A 1BW (GB)**

# (54) NEGATIVE ELECTRODE FOR RECHARGEABLE LITHIUM BATTERY AND RECHARGEABLE LITHIUM BATTERY INCLUDING SAME

(57) A negative electrode for a rechargeable lithium battery includes a current collector, and a negative active material layer on the current collector and including a copolymer binder, a Si-C composite negative active material, and a crystalline carbon negative active material, wherein the copolymer binder includes a (meth)acrylic acid-based repeating unit and a (meth)acrylonitrile-based repeating unit, and a DD (Degree of Divergence) value defined by Equation 1 is about 30 or more.

Equation 1

$$DD\ (\text{Degree of Divergence}) = (I_a/I_{total}) * 100$$

wherein,
$I_a$ is a sum of peak intensities at 2θ = 42.4±0.2°, 43.4±0.2°, 44.6±0.2°, 77.5±0.2° measured by XRD utilizing a Cu Kα ray, and
$I_{total}$ is a sum of peak intensities at 2θ = 26.5±0.2°, 42.4±0.2°, 43.4±0.2°, 44.6±0.2°, 54.7±0.2°, 77.5±0.2° measured by XRD utilizing a Cu Kα ray.

FIG. 1

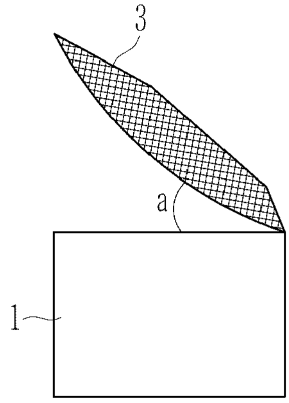

## Description

## BACKGROUND

### 1. Field

One or more embodiments of the present disclosure relate to a negative electrode for a rechargeable lithium battery and a rechargeable lithium battery including the negative electrode.

### 2. Description of the Related Art

A rechargeable lithium battery, which has recently drawn attention as a power source for small portable electronic devices, utilizes an organic electrolyte solution and thereby, has twice or more a discharge voltage as compared to a battery utilizing an alkali aqueous solution does, and accordingly, has relatively high energy density.

The investigation for a silicon negative active material, which has a high discharge specific capacity of about 3400 mAh/g and is capable of rapid bonding with lithium ions and rapid charging and discharging, has been actively undertaken for rechargeable lithium batteries.

## SUMMARY

One or more aspects of embodiments of the present disclosure are directed toward a negative electrode for a rechargeable lithium battery exhibiting good or suitable energy density and improved expansion characteristic.

One or more aspects of embodiments of the present disclosure are directed toward a rechargeable lithium battery including the negative electrode.

Additional aspects will be set forth in part in the description which follows and, in part, will be apparent from the description, or may be learned by practice of the presented embodiments of the disclosure.

According to one or more embodiments of the present disclosure, a negative electrode for a rechargeable lithium battery includes a current collector; and a negative active material layer on the current collector and including a copolymer binder, a Si-C composite first negative active material (e.g., in a form of particles), and a crystalline carbon second negative active material (e.g., in a form of particles), wherein the copolymer binder includes a first repeating unit derived from a (meth)acrylic acid-based monomer and a second repeating unit derived from a (meth)acrylonitrile monomer, and a DD (Degree of Divergence) value, defined by Equation 1, of the negative electrode is about 30 or more.

### Equation 1

$$DD \text{ (Degree of Divergence)} = (I_a/I_{total}) * 100$$

wherein,

$I_a$ is a sum of peak intensities at $2\theta = 42.4\pm0.2°$, $43.4\pm0.2°$, $44.6\pm0.2°$, and $77.5\pm0.2°$ measured by X-Ray diffraction (XRD) utilizing a Cu K$\alpha$ ray, and,

$I_{total}$ is a sum of peak intensities at $2\theta = 26.5\pm0.2°$, $42.4\pm0.2°$, $43.4\pm0.2°$, $44.6\pm0.2°$, $54.7\pm0.2°$, and $77.5\pm0.2°$ measured by XRD utilizing a Cu K$\alpha$ ray.

According to one or more embodiments of the present disclosure, a rechargeable lithium battery including the negative electrode; a positive electrode including a positive active material; and a non-aqueous electrolyte, is provided.

At least some of the above and other features of the invention are set out in the claims.

Other embodiments are included in the following detailed description.

A negative electrode of one or more embodiments of the present disclosure for a rechargeable lithium battery may exhibit improved expansion characteristics.

## BRIEF DESCRIPTION OF THE DRAWINGS

The accompanying drawings are included to provide a further understanding of the present disclosure, and are incorporated in and constitute a part of this specification. The drawings illustrate example embodiments of the present disclosure and, together with the description, serve to explain principles of present disclosure.

FIG. 1 is a schematic view showing an orientation of a negative active material on a negative electrode according to one or more embodiments of the present disclosure.

FIG. 2 is a schematic view showing orientations of a negative electrode according to one or more embodiments of the present disclosure.

FIG. 3 schematically shows a process for imparting orientations in a negative electrode preparation according to one or more embodiments of the present disclosure.

FIG. 4 is a schematic view showing the structure of a rechargeable lithium battery according to one or more embodiments of the present disclosure.

FIG. 5 is an image from a disassembled rechargeable lithium cell according to Example 6 after formation charging and discharging.

FIG. 6 is an image of a disassembled rechargeable lithium cell according to Reference Example 1, after conducting formation charging and discharging.

**DETAILED DESCRIPTION**

The present disclosure may be modified in many alternate forms, and thus specific embodiments will be exemplified in the drawings and described in more detail. It should be understood, however, that it is not intended to limit the present disclosure to the particular forms disclosed, but rather, is intended to cover all modifications, equivalents, and alternatives falling within the scope of the present disclosure.

Hereinafter, embodiments of the present disclosure will be described in more detail. However, these embodiments are merely examples, the present disclosure is not limited thereto and the present disclosure is defined by the scope of claims and equivalents thereof.

Terms utilized in the present disclosure are utilized to explain embodiments, but are not intended limit the present disclosure. As utilized herein, the singular forms "a," "an," "one," and "the" are intended to include the plural forms as well, unless the context clearly indicates otherwise. Further, the use of "may" when describing embodiments of the present disclosure refers to "one or more embodiments of the present disclosure".

The term "combination thereof "may include a mixture, a laminate, a complex, a copolymer, an alloy, a blend, a reactant of constituents.

The terms "comprise(s)/comprising," "include(s)/including," or "have(has)/having" are intended to designate that the performed characteristics, numbers, step, constituted elements, or a combination thereof is present, but it should be understood that the possibility of presence or addition of one or more other characteristics, numbers, steps, constituted elements, or a combination are not to be precluded in advance.

In the present disclosure, when a definition is not otherwise provided, it will be understood that when an element such as a layer, film, region, or substrate is referred to as being "on" another element, it can be directly on the other element or intervening elements may also be present therebetween.

As utilized herein, "A and/or B" may indicate "A or B or both (e.g., simultaneously) of them". Further, the "/" utilized herein may be interpreted as "and" or as "or" depending on the situation. Expressions such as "at least one of," "one of," and "selected from," when preceding a list of elements, modify the entire list of elements and do not modify the individual elements of the list. For example, "at least one of a, b, or c", "at least one of a, b, and/or c", "at least one selected from a, b, and c", "at least one selected from among a to c", etc. may indicate only a, only b, only c, both (e.g., simultaneously) a and b, both (e.g., simultaneously) a and c, both (e.g., simultaneously) b and c, all of a, b, and c, or variations thereof.

When an element, such as a layer, a film, a region, a plate, and/or the like is referred to as being "on" or "over" another part, it may include cases where it is "directly on" another element, but also cases where there is yet another element (e.g., an intervening element) in therebetween. In contrast, when an element is referred to as being "directly on" another element, there are no intervening elements present.

As utilized herein, the term "particle size" or "particle diameter" may be an average particle diameter. If (e.g., when) a particle has a spherical shape, the particle size/diameter may indicate a diameter of the particle, and if (e.g., when) a particle has a non-spherical shape, the particle size/diameter may indicate a size (e.g., a length) of a longer axis (e.g., a major axis) of the particle.

When a definition is not otherwise provided in the specification, an average particle diameter/size indicates an average particle diameter/size (D50) where a cumulative volume is about 50 volume% in a particle size distribution. The particle diameter/size, and the average particle diameter/size (D50) may be measured by a method well suitable (known) to those skilled in the art, for example, by a particle size analyzer, or by a transmission electron microscopic image, a scanning electron microscopic image, or field emission scanning electron microscopy (FE-SEM). In some embodiments, a dynamic light-scattering measurement device may be utilized to perform a data analysis, and the number of particles is counted for each particle size range, and from the data, the average particle diameter/size (D50) value may be easily obtained through a calculation. In some embodiments, a laser diffraction method may be utilized. The laser diffraction

may be obtained by distributing particles to be measured in a distribution solvent and introducing it to a commercially available laser diffraction particle measuring device (e.g., MT 3000 available from Microtrac, Inc.), irradiating ultrasonic waves of about 28 kHz at a power of 60 W, and calculating an average particle diameter/size (D50) in the 50% standard of particle distribution in the measuring device.

A negative electrode for a rechargeable lithium battery according to one or more embodiments includes a current collector (e.g., negative electrode current collector); and a negative active material layer on the current collector and including a copolymer binder, a Si-C composite first negative active material (e.g., in a form of particles), and a crystalline carbon second negative active material (e.g., in a form of particles).

The copolymer binder includes a first repeating unit derived from a (meth)acrylic acid-based monomer and a second repeating unit derived from a (meth)acrylonitrile monomer. In one or more embodiments, the copolymer binder may further include a third repeating unit derived from an additional monomer which is capable of copolymerizing with the (meth)acrylic acid-based monomer and/or the (meth)acrylonitrile monomer.

In one or more embodiments, the "(meth)" may indicate to include or not include a methyl group. For example, (meth)acrylic acid indicates methacrylic acid or acrylic acid.

An amount of the first repeating unit derived from the (meth)acrylic acid-based monomer may be about 35 wt% to about 65 wt% or about 40 wt% to about 65 wt% based on an amount, 100 wt%, of the copolymer binder. In the copolymer binder, if (e.g., when) the amount of the first repeating unit derived from the (meth)acrylic acid-based monomer is within the range, the distribution of the negative active material may be further improved, and the storage stability of a negative active material composition (e.g., a negative active material layer composition) utilized in a negative electrode preparation may be further improved.

An amount of the second repeating unit derived from the (meth)acrylonitrile monomer may be about 35 wt% to about 65 wt% or about 35 wt% to about 60 wt% based on an amount, 100 wt%, of the copolymer binder. In the copolymer binder, if (e.g., when) the amount of the second repeating unit derived from the (meth)acrylonitrile monomer is within the range, it may be more readily to prepare the negative electrode, the negative active material layer may be more firmly adhered to the current collector, and the storage safety of the negative active material composition utilized in the negative electrode preparation may be further improved.

In one or more embodiments, the (meth)acrylic acid-based monomer may be (meth)acrylic acid, an alkali or alkaline earth metal salt of (meth)acrylic acid, an ammonium salt of (meth)acrylic acid, or one or more combinations thereof. The alkali or alkaline earth metal salt of the (meth)acrylic acid may be sodium acrylate, lithium acrylate, potassium acrylate, calcium acrylate, magnesium acrylate, sodium (meth)acrylate, lithium (meth)acrylate, potassium (meth)acrylate, calcium (meth)acrylate, or one or more combinations thereof. The ammonium salt of the (meth)acrylic acid may be an ammonia-neutralized product of (meth)acrylic acid, a monoethanolamine-neutralized product of (meth)acrylic acid, a diethanolamine-neutralized product of (meth)acrylic acid, a hydroxyl amine-neutralized product of (meth)acrylic acid, or one or more combinations thereof.

In one or more embodiments, the copolymer binder may further include a third repeating unit derived from an additional monomer which is capable of copolymerizing with the (meth)acrylic acid-based monomer and/or the (meth)acrylonitrile monomer.

The additional monomer which is capable of copolymerizing with the (meth)acrylic acid-based monomer and/or the (meth)acrylonitrile monomer may include a hydroxyl group-containing monomer or an amide group-containing monomer. The hydroxyl group-containing monomer, may be, for example, 2-hydroxyethyl(meth)acrylate, 2-hydroxypropyl(meth)acrylate, 4-hydroxybutyl(meth)acrylate, 2-hydroxyhexyl(meth)acrylate, 6-hydroxyhexyl(meth)acrylate, 8-hydroxyoctyl(meth)acrylate, 10-hydroxydecyl(meth)acrylate, 12-hydroxylauryl(meth)acrylate, 4-hydroxymethylcyclohexyl(methyl)acrylate, N-methylol(meth)acrylamide, N-hydroxy(meth)acrylamide, vinyl alcohol, allylalcohol, 2-hydroxy ethylvinylether, 4-hydroxybutylvinylether, diethyleneglycolmonovinylether, or one or more combinations thereof. The amide group-containing monomer may be, for example, acrylamide, methacrylamide, diethyl(meth)acrylamide, N-vinylpyrrolidone, N-vinyl-2-pyrrolidone, N-(meth)acryloylpyrrolidone, N,N-dimethylacrylamide, N,N-dimethylmethacrylamide, N,N-diethyl acrylamide, N,N-diethylmethacrylamide, N,N'-methylenebisacrylamide, N,N-dimethylaminopropylacrylamide, N,N-dimethylaminopropylmethacrylamide, or one or more combinations thereof.

If (e.g., when) the copolymer binder further includes the third repeating unit derived from an additional monomer which is capable of copolymerizing with the (meth)acrylic acid-based monomer and/or the (meth)acrylonitrile monomer, an amount of the third repeating unit may be more than 0 wt% and about 20 wt% or less based on an amount, 100 wt%, of the copolymer binder.

Herein, in one or more embodiments, an amount of the first repeating unit or the second repeating unit may be appropriately adjusted. For example, in some embodiments, the amount of the first repeating unit or the second repeating unit may be about 35 wt% or more and less than about 65 wt%.

If (e.g., when) the copolymer binder further includes the third repeating unit, the electrode expansion of the negative electrode may be more effectively suppressed or reduced.

In one or more embodiments, the copolymer binder may be a water-soluble copolymer for the dispersion

stabilization of the copolymer. The copolymer binder may have a viscosity of about 500 mPa·s to about 3000 mPa s, about 750 mPa·s to about 2500 mPa s, about 750 mPa·s to about 2000 mPa s, about 750 mPa·s to about 1500 mPa s, or about 1000 mPa·s to about 1500 mPa·s in an aqueous solution having a solid content (e.g., amount) of about 7 wt%. If (e.g., when) the viscosity of the aqueous solution having the solid content (e.g., amount) of about 7 wt% of the copolymer binder is within the range, the adhesion of the negative active material layer to the current collector may be further improved and cycle-life characteristic of the rechargeable lithium battery may be further improved.

The viscosity may be measured using a Brookfield Viscometer with LV4

Spindle at 20 rpm to 530 rpm and a room temperature (20°C to 25°C), but it is not limited thereto. For example, the viscosity may be measured using a Brookfield Viscometer with LV4 Spindle at 30 rpm and a room temperature (25°C).

In one or more embodiments, the copolymer binder may include a copolymer of acrylic acid and acrylonitrile.

In one or more embodiments, the copolymer binder may have a weight average-molecular weight (Mw) of about 100,000 g/mol to about 1,500,000 g/mol, or about 500,000 g/mol to about 1,000,000 g/mol. In one or more embodiments, the weight average-molecular weight (Mw) may be measured by a GPC (gel permeation chromatography).

In one or more embodiments, the negative electrode has a DD (Degree of Divergence) value defined by Equation 1 of about 30 or more, for example, about 30 to about 60, about 30 to about 55, about 35 to about 55, or about 40 to about 55.

## Equation 1

$$DD\ (\text{Degree of Divergence}) = (I_a/I_{total}) * 100$$

In Equation 1,

$I_a$ is a sum of peak intensities at non-planar angles measured by XRD utilizing a Cu K$\alpha$ ray, and,
$I_{total}$ is a sum of peak intensities at all angles measured by XRD utilizing a Cu K$\alpha$ ray.

The non-planar angles denote 2$\theta$ = 42.4$\pm$0.2°, 43.4$\pm$0.2°, 44.6$\pm$0.2°, and 77.5$\pm$0.2° when measured by XRD utilizing a Cu K$\alpha$ ray, that is, a (100) plane, a (101)R plane, a (101)H plane, and a (110) plane. In the present art, graphite has a structure classified into a rhombohedral structure and a hexagonal structure having an ABAB type or kind stacking sequence according to stacking order of graphene layers, and the R plane denotes the rhombohedral structure, while the H plane denotes the hexagonal structure.

Thus, the $I_a$ is a sum of peak intensities at 2$\theta$ = 42.4$\pm$0.2°, 43.4$\pm$0.2°, 44.6$\pm$ 0.2°, and 77.5$\pm$0.2° when measured by XRD utilizing a Cu K$\alpha$ ray.

The all angles denote 2$\theta$ = 26.5$\pm$0.2°, 42.4$\pm$0.2°, 43.4$\pm$0.2°, 44.6$\pm$0.2°, 54.7$\pm$0.2°, and 77.5$\pm$0.2° when measured by XRD utilizing a Cu K$\alpha$ ray, that is, a (002) plane, a (100) plane, a (101)R plane, a (101)H plane, a (004) plane, and a (110) plane. In some embodiments, a peak at 2$\theta$ = 43.4$\pm$0.2° may also be considered to appear by overlapping a peak of a (101)R plane of a carbon-based material with another peak of a (111) plane of a current collector, for example, Cu.

Thus, the $I_{total}$ is a sum of peak intensities at 2$\theta$ = 26.5$\pm$0.2°, 42.4$\pm$0.2°, 43.4$\pm$0.2°, 44.6$\pm$0.2°, 54.7$\pm$0.2°, and 77.5$\pm$0.2° measured by XRD utilizing a Cu K$\alpha$ ray.

In the present art, peak intensity may indicate a height of a peak or an integral area of the peak, and according to one or more embodiments, the peak intensity indicates the integral area of a peak.

In one or more embodiments, the XRD is measured under a measurement condition of 2$\theta$ = 10° to 80°, a scan speed (°/s) (i.e., degree per second) of 0.044 to 0.089, and a step size (°/step) of 0.013 to 0.039 by utilizing a Cu K$\alpha$ ray as a target ray but removing a monochromator to improve a peak intensity resolution.

The DD value indicates that the negative (electrode) active material included in the negative active material layer is oriented at a set or predetermined angle, and a larger value indicates that the negative (electrode) active material is well oriented. For example, as schematically shown in FIG. 1, as the DD value is increased, an angle (a) is increased when the negative active material 3 is oriented to one side of the substrate 1 with the angle a. Furthermore, in one or more embodiments, the DD value is maintained after charge and discharge.

In one or more embodiments, the DD value of the negative electrode is about 30 or more, for example, about 30 to about 60, or about 30 to about 50. The DD value of the negative electrode of about 30 or more indicates that the negative active material stands substantially vertical to the current collector at a set or predetermined angle, indicating that the negative active material layer of the negative electrode is an oriented layer (e.g., an anisotropic layer). For example, the standing substantially vertically not only indicates to be standing at a 90° angle to the current collector (e.g., to a surface of the current collector on which the negative active material layer is arranged), but also indicates to be standing at an angle close to 90° (e.g., about 90°).

If (e.g., when) the DD value of the negative electrode is less than 30, the negative active material layer corresponds to a non-oriented layer or even though the negative active material layer corresponds to an oriented layer, the effect for suppressing the expansion is insignificant.

In one or more embodiments, the negative active material 3a is positioned relative to the current collector 1 in a vertical direction, and thus, the volume expansion may occur in a horizontal direction during charge and discharge of the battery including the negative electrode (as shown in FIG. 2). Thus, the extreme volume expansion in a vertical direction, which may occur if (e.g., when) the negative active material including Si is utilized, may be effectively suppressed or reduced, which significantly reduces a thickness increase rate and prevents the detachment of the negative active material layer from the current collector. Thus, the negative active material including Si which may improve energy density may be readily applied to the batteries.

Because the negative electrode according to one or more embodiments includes the copolymer binder as a binder, the volume expansion of the negative electrode may be more effectively suppressed or reduced, and flexibility and adhesion may be secured in a negative electrode preparation. This allows to prevent or reduce the detachment of the negative active material layer from the current collector, even after the battery including the negative electrode is charged and discharged.

In one or more embodiments, an amount of the binder (e.g. copolymer binder) may be about 0.5 wt% to about 5 wt%, about 0.8 wt% to about 5 wt%, about 1.0 wt% to about 5 wt%, or about 1.2 wt% to about 4.0 wt% based on the total weight, 100 wt%, of the negative active material layer. If (e.g., when) the amount of the binder is within the range, the volume expansion of the negative electrode during charging and discharging the battery may be further reduced.

In one or more embodiments, the negative active material includes the Si-C composite first negative active material and the crystalline carbon second negative active material, and an amount of Si may be about 1 wt% to about 20 wt% or about 3 wt% to about 20 wt% based on the total weight, 100 wt%, of the first negative active material and the second negative active material. If (e.g., when) the negative active material includes Si with the amount at the above ranges, energy density of the negative electrode may be further improved, and high-capacity may be obtained.

In one or more embodiments, the crystalline carbon second negative active material (e.g., crystalline carbon-based active material) may be unspecified-shaped (e.g., irregularly shaped), a sheet-shaped, a flake-shaped, a spherical-shaped, or a fiber-shaped artificial graphite, natural graphite, or one or more combinations thereof.

The Si-C composite (i.e., Si-C composite negative active material) may include Si and a carbon-based material. The carbon-based material may be amorphous carbon or crystalline carbon. In one or more embodiments, the Si-C composite, for example, may include a core including Si particles and a carbon-based material around (e.g., surrounding) the core. The core may further include a carbon-based material. For example, in some embodiments, the Si-C composite may include a core where Si particles and a first carbon-based material are mixed and a second carbon-based material around (e.g., surrounding) the core. The first carbon-based material may be different from or the same as the second carbon-based material, and may be, amorphous carbon or crystalline carbon. The example of the Si-C composite may include secondary particles, i.e., aggregates, where at least one Si nano primary particle and crystalline carbon are aggregated and an amorphous carbon coating layer is around (e.g., surrounding) the aggregates, and may include amorphous carbon filled between the aggregates to surround the surface of the primary particles.

In the Si-C composite, an amount of Si may be adjusted in order to be included in a range of about 1 wt% to about 20 wt%, or about 3 wt% to about 20 wt% based on the total weight of the first and the second negative active materials.

In one or more embodiments, the Si (e.g., Si particles) may have a particle diameter of about 10 nm to about 30 μm, according to one or more embodiments, about 10 nm to about 1000 nm, and according to one or more embodiments, about 20 nm to about 150 nm. If (e.g., when) the average particle diameter of the silicon is within the range, the extreme volume expansion caused during charge and discharge may be suppressed or reduced, and a breakage of the conductive path due to crushing of particles may be prevented or reduced.

In one or more embodiments, a mixing ratio of the Si-C composite first negative active material to the crystalline carbon second negative active material may be a weight ratio of about 3:97 to about 10:90, about 3:97 to about 15:85, or about 7:93 to about 10:90. If (e.g., when) the mixing ratio of the Si-C composite first negative active material to the crystalline carbon second negative active material is within the range, high energy density effects may be realized, while relatively high-capacity may be obtained.

The amorphous carbon may be pitch carbon, soft carbon, hard carbon, mesophase pitch carbide, sintered coke, carbon fiber, or one or more combinations thereof, and the crystalline carbon may be unspecified shaped (e.g., irregularly shaped), sheet shaped, flake shaped, spherical shaped, or fiber shaped natural graphite, artificial graphite, or one or more combinations thereof.

In one or more embodiments, the DD value is obtained by charging and discharging a rechargeable lithium battery including the negative electrode, then disassembling the fully discharged rechargeable lithium battery to obtain the negative electrode, and measuring an XRD of the negative electrode.

The charge and discharge are once or twice performed at about 0.1 C to about 0.2 C. The DD value of the negative active material layer is obtained by taking off the negative active material layer utilizing a tape after charge and

discharge to collect the negative active material layer and measuring an XRD for the resulting negative active material layer attached to the current collector.

In one or more embodiments, the negative active material layer may have a thickness of about 10 μm to about 100 μm. The negative active material layer with the thickness within the range may have advantageous properties related to adhesion. In one or more embodiments, the negative active material layer may be formed on at least one side, for example, on either one side or both (e.g., opposite) sides, of the current collector, and the thickness may be a thickness of one side of the negative active material layer. For example, the thickness may be a thickness of the negative active material layer on one side of the current collector. If (e.g., when) the negative active material layer is formed on the both (e.g., opposite) sides of the current collector, an entire thickness of the negative active material layer included in the negative electrode may be about 20 μm to about 200 μm.

The thickness of the negative active material layer may refer to a thickness after pressurizing and vacuum-drying in the negative electrode preparation. The vacuum-drying may be performed under a pressure of about 0.03 atm to about 0.06 atm at about 100 °C to about 160 °C.

If (e.g., when) the negative active material layer includes the negative active material and the copolymer binder, an amount of the negative active material may be about 96 wt% to about 99.2 wt% based on the total weight of the negative active material layer.

In one or more embodiments, the negative active material layer may further include an aqueous binder. In the negative active material layer, an amount of the copolymer binder may be about 0.8 wt% to about 5 wt% based on the total weight of the negative active material layer, an amount of the negative active material may be about 90 wt% to about 98.2 wt% based on the total weight of the negative active material layer, and an amount of the aqueous binder may be about 1 wt% to about 5 wt% based on the total weight of the negative active material layer.

In one or more embodiments, the negative active material layer may further include a conductive material. In the negative active material layer, an amount of the copolymer binder may be about 0.8 wt% to about 5 wt% based on the total weight of the negative active material layer, an amount of the negative active material may be about 85 wt% to about 97.2 wt% based on the total weight of the negative active material layer, an amount of the conductive material may be about 1 wt% to about 5 wt% based on the total weight of the negative active material layer, and an amount of the aqueous binder may be about 1 wt% to about 5 wt% based on the total weight of the negative active material layer.

The aqueous binder may be a styrene-butadiene rubber (SBR), an acrylated styrene-butadiene rubber (ABR), an acrylonitrile-butadiene rubber, an acrylic rubber, a butyl rubber, a fluorine rubber, polyvinyl pyrrolidone, polypropylene, polyepichlorohydrin, polyphosphazene, an ethylene propylene diene copolymer, polyvinylpyridine, chlorosulfonated polyethylene, latex, a polyester resin, an acrylic resin, a phenolic resin, an epoxy resin, polyvinyl alcohol, or one or more combinations thereof.

In some embodiments, the aqueous binder may further include a cellulose-based compound. The cellulose-based compound may be carboxymethyl cellulose, hydroxypropylmethyl cellulose, methyl cellulose, or alkali metals thereof. The alkali metal may be Na, K, or Li.

The conductive material may be included to provide electrode conductivity. Any electrically conductive material may be utilized as a conductive material unless it causes a chemical change. Non-limiting examples of the conductive material may be a carbon-based material such as natural graphite, artificial graphite, carbon black, acetylene black, ketjen black, a carbon fiber, and/or the like; a metal-based material of a metal powder or a metal fiber including copper, nickel, aluminium, silver, and/or the like; a conductive polymer such as a polyphenylene derivative; or one or more mixtures (and/or combinations) thereof.

The current collector may include one selected from a copper foil, a nickel foil, a stainless steel foil, a titanium foil, a nickel foam, a copper foam, a polymer substrate coated with a conductive metal, and one or more combinations thereof, but embodiments of the present disclosure are not limited thereto.

Such a negative electrode according to one or more embodiments may be prepared by applying a magnetic field, while a negative active material layer composition is coated on a current collector. A method of preparing the negative electrode according to one or more embodiments will be illustrated in more detail, with reference to FIG. 3.

As shown in FIG. 3, a magnet 7 is positioned under a current collector 1, a negative active material layer composition including the negative active material 3a is coated on the current collector 1, and dried to prepare a negative active material layer U1. The coating of the negative active material layer composition may be performed by moving the current collector 1 in a direction of coating while the magnet 7 is positioned under the current collector 1. Accordingly, the magnetic field (magnetic flux) by the magnet 7 is formed in a direction perpendicular to the current collector 1, but the magnetic field depending on the coating speed (a speed of moving the current collector) is formed at a set or predetermined angle as a vector function. In this way, the carbon-based negative active material included in the negative active material layer composition stands, that is, be oriented as the set or predetermined angle to the current collector, and resultantly, the negative active material layer is formed as an oriented layer (e.g., an anisotropic layer).

In one or more embodiments, the magnet may have strength of a magnetic field of about 1000 Gauss to about 10000 Gauss, for example, about 4000 Gauss to about 8000 Gauss, or 5000 Gauss to about 7000 Gauss. In some

embodiments, the negative active material layer composition may be coated on the current collector and maintained for about 3 seconds to about 15 seconds, that is, may be exposed to the magnetic field for about 3 seconds to about 15 seconds. In one or more embodiments, the time for exposing to the magnetic field may be about 3 seconds to about 12 seconds. Depending on the time for exposing to the magnetic field, the obtained DD value may be varied.

Furthermore, the DD value may be also obtained by adjusting a viscosity of the negative active material layer composition.

In one or more embodiments, the viscosity of the negative active material layer composition may be about 2000 cps to about 4000 cps, about 2000 cps to about 3500 cps, or about 2500 cps to about 3500 cps at room temperature (about 20 °C to about 25 °C). The viscosity of the negative active material layer composition may be controlled or selected within the range.

Lower viscosity of the negative active material layer composition than the range may cause an extreme increase in the degree of verticality of the crystalline carbon-based negative active material (e.g., the crystalline carbon second negative active material) included in the negative active material layer to cause poor contact of the negative active material particles, and thus, the electron transfer resistance of the negative active material layer may be increased, whereas higher viscosity than the range may decrease the effect from orientation, thereby reducing the impregnability of the electrolyte.

In one or more embodiments, the negative active material layer composition may be prepared by mixing the negative active material and the copolymer binder in a solvent. In some embodiments, an aqueous binder may be further added to the negative active material layer composition, or the aqueous binder and a conductive material may be further added thereto.

In one or more embodiments, the solvent may be water.

A rechargeable lithium battery according to one or more embodiments may include the negative electrode, a positive electrode, and an electrolyte.

The positive electrode may include a positive electrode current collector and a positive active material layer including a positive active material (e.g., in a particle form) formed on the positive electrode current collector.

The positive active material may include one or more lithiated intercalation compounds that reversibly intercalate and deintercalate lithium ions, and in one or more embodiments, one or more composite oxides of a metal selected from cobalt, manganese, nickel, and one or more combinations thereof, and lithium, may be utilized. For example, the compounds represented by one or more of the following chemical formulae may be utilized. $Li_aA_{1-b}X_bD^1_2$ ($0.90 \le a \le 1.8$, $0 \le b \le 0.5$); $Li_aA_{1-b}X_bO_{2-c1}D^1_{c1}$ ($0.90 \le a \le 1.8$, $0 \le b \le 0.5$, $0 \le c1 \le 0.05$); $Li_aE_{1-b}X_bO_{2-c1}D^1_{c1}$ ($0.90 \le a \le 1.8$, $0 \le b \le 0.5$, $0 \le c1 \le 0.05$); $Li_aE_{2-b}X_bO_{4-c1}D^1_{c1}$ ($0.90 \le a \le 1.8$, $0 \le b \le 0.5$, $0 \le c1 \le 0.05$); $Li_aNi_{1-b-c}Co_bX_cD^1_\alpha$ ($0.90 \le a \le 1.8$, $0 \le b \le 0.5$, $0 \le c \le 0.5$, $0 \le \alpha \le 2$); $Li_aNi_{1-b-c}Co_bX_cO_{2-\alpha}T_\alpha$ ($0.90 \le a \le 1.8$, $0 \le b \le 0.5$, $0 \le c \le 0.5$, $0 < \alpha < 2$); $Li_aNi_{1-b-c}Co_bX_cO_{2-\alpha}T_2$ ($0.90 \le a \le 1.8$, $0 \le b \le 0.5$, $0 \le c \le 0.5$, $0 < \alpha < 2$); $Li_aNi_{1-b-c}Mn_bX_cD^1_\alpha$ ($0.90 \le a \le 1.8$, $0 \le b \le 0.5$, $0 \le c \le 0.5$, $0 < \alpha \le 2$); $Li_aNi_{1-b-c}Mn_bX_cO_{2-\alpha}T_\alpha$ ($0.90 \le a \le 1.8$, $0 \le b \le 0.5$, $0 \le c \le 0.5$, $0 < \alpha < 2$); $Li_aNi_{1-b-c}Mn_bX_cO_{2-\alpha}T_2$ ($0.90 \le a \le 1.8$, $0 \le b \le 0.5$, $0 \le c \le 0.5$, $0 < \alpha < 2$); $Li_aNi_bE_cG_dO_2$ ($0.90 \le a \le 1.8$, $0 \le b \le 0.9$, $0 \le c \le 0.5$, $0.001 \le d \le 0.1$); $Li_aNi_bCo_cL^1_dG_eO_2$ ($0.90 \le a \le 1.8$, $0 \le b \le 0.9$, $0 \le c \le 0.5$, $0 \le d \le 0.5$, $0 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMn_{1-b}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $QO_2$; $QS_2$; $LiQS_2$; $V_2O_5$; $LiV_2O_5$; $LiZO_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); $Li_aFePO_4$ ($0.90 \le a \le 1.8$).

In the above chemical formulas, A may be selected from among nickel (Ni), cobalt (Co), manganese (Mn), and one or more combinations thereof; X may be selected from among aluminium (Al), Ni, Co, Mn, chromium (Cr), iron (Fe), magnesium (Mg), strontium (Sr), vanadium (V), a rare earth element, and one or more combinations thereof; $D^1$ may be selected from among oxygen (O), fluorine (F), sulfur (S), phosphorus (P), and one or more combinations thereof; E may be selected from among Co, Mn, and a combination thereof; T may be selected from among F, S, P, and one or more combinations thereof; G may be selected from among Al, Cr, Mn, Fe, Mg, lanthanum (La), cerium (Ce), Sr, V, and one or more combinations thereof; Q may be selected from among titanium (Ti), molybdenum (Mo), Mn, and one or more combinations thereof; Z may be selected from among Cr, V, Fe, scandium (Sc), yttrium (Y), and one or more combinations thereof; J may be selected from among V, Cr, Mn, Co, Ni, copper (Cu), and one or more combinations thereof; $L^1$ is selected from among Mn, Al, and a combination thereof.

In one or more embodiments, the compounds, described above, in a particle form may have a coating layer on the surface thereof, or may be mixed with another compound having a coating layer. The coating layer may include at least one coating element compound selected from among an oxide of a coating element, a hydroxide of a coating element, an oxyhydroxide of a coating element, an oxycarbonate of a coating element, and a hydroxyl carbonate of a coating element. The coating element compound for the coating layer may be amorphous or crystalline. The coating element included in the coating layer may include Mg, Al, Co, potassium (K), sodium (Na), calcium (Ca), Si, Ti, V, tin (Sn), germanium (Ge), gallium (Ga), boron (B), arsenic (As), zirconium (Zr), or one or more mixtures thereof. The coating layer may be disposed in a method having no adverse influence on properties of the positive active material by utilizing these elements in the compound. For example, the method may include any coating method such as spray coating, dipping, and/or the like, which will not be illustrated in more detail because it is well-suitable (known) in the related field.

In the positive electrode, an amount of the positive active material may be about 90 wt% to about 98 wt% based on the total weight of the positive active material layer.

In some embodiments, the positive active material layer may further include a binder and a conductive material. The binder and the conductive material may be each included in an amount of about 1 wt% to about 5 wt%, based on the total amount of the positive active material layer.

The binder improves binding properties of positive active material particles with one another and with the positive electrode current collector. Examples thereof may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing a polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but embodiments of the present disclosure are not limited thereto.

The conductive material may be included to provide electrode conductivity. Any electrically conductive material may be utilized as a conductive material unless it causes a chemical change. Non-limiting examples of the conductive material may include a carbon-based material such as natural graphite, artificial graphite, carbon black, acetylene black, ketjen black, carbon fiber, and/or the like; a metal-based material of a metal powder or a metal fiber including copper, nickel, aluminium, silver, and/or the like; a conductive polymer such as polyphenylene derivatives; or one or more mixtures thereof.

The positive electrode current collector may be an aluminium foil, a nickel foil, or one or more combinations thereof, but embodiments of the present disclosure are not limited thereto.

The positive active material layer or the negative active material layer may be formed by mixing a respective active material, binder, and optionally a conductive material in a solvent to prepare an active material layer composition and coating the active material layer composition on a respective current collector. Such an active material layer preparation method is well suitable (known) in the related art so that the detailed description will not be provided in the present disclosure. In one or more embodiments, the solvent may be N-methyl pyrrolidone, water, and/or the like, but embodiments of the present disclosure are not limited thereto. In some embodiments, the solvent for the negative active material layer composition may be water.

The electrolyte may include a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent, or a mixture thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, propyl propionate, decanolide, mevalonolactone, caprolactone, and/or the like. The ether-based solvent may include dibutyl ether, tetraglyme, diglyme, dimethoxyethane, 2-methyltetrahydrofuran, tetrahydrofuran, and/or the like. Furthermore, the ketone-based solvent may include cyclohexanone, and/or the like. The alcohol-based solvent may include ethanol, isopropyl alcohol, and/or the like, and the aprotic solvent may include nitriles such as R-CN (where R is a C2 to C20 linear, branched, or cyclic hydrocarbon, and may include a double bond, an aromatic ring, or an ether bond), amides such as dimethylformamide, and/or the like, dioxolanes such as 1,3-dioxolane, 1,4-dioxolane, and/or the like, sulfolanes, and/or the like.

The non-aqueous organic solvent may be utilized alone or in a mixture. If (e.g., when) the non-aqueous organic solvent is utilized in a mixture, a mixture ratio may be controlled or selected in accordance with a desirable battery performance and it may be well suitable (known) to one in the related art.

In one or more embodiments, the carbonate-based solvent may include a mixture with a cyclic carbonate and a linear carbonate. The cyclic carbonate and linear carbonate are mixed together in a volume ratio of about 1:1 to about 1:9, and when the mixture is utilized as a non-aqueous organic solvent of the electrolyte, it may have enhanced performance.

If (e.g., when) the non-aqueous organic solvents are mixed and utilized, a mixed solvent of cyclic carbonate and linear carbonate, a mixed solvent of cyclic carbonate and a propionate-based solvent, or a mixed solvent of cyclic carbonate, linear carbonate, and a propionate-based solvent may be utilized. The propionate-based solvent may include methyl propionate, ethyl propionate, propyl propionate, or one or more combinations thereof.

If (e.g., when) a mixture of cyclic carbonate and linear carbonate, or a mixture of cyclic carbonate and propionate-based solvent is utilized, it may be desirable to utilize it with a volume ratio of about 1:1 to about 1:9 considering the performances. In some embodiments, a cyclic carbonate, a linear carbonate, and a propionate-based solvent may be mixed and utilized at a volume ratio of 1:1:1 to 3:3:4. The mixing ratio of the solvents may also be appropriately adjusted according to the desired or suitable properties.

In one or more embodiments, the non-aqueous organic solvent may further include an aromatic hydrocarbon-based solvent as well as the carbonate-based solvent. Herein, the carbonate-based solvent and the aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

## Chemical Formula 1

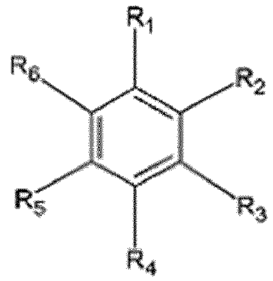

In Chemical Formula 1, $R_1$ to $R_6$ may each independently be the same or different and may each independently be selected from among hydrogen, a halogen, a C1 to C10 alkyl group, a haloalkyl group (e.g. a C1 to C10 haloalkyl group), and one or more combinations thereof.

Non-limiting examples of the aromatic hydrocarbon-based organic solvent may be selected from among benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and one or more combinations thereof.

In one or more embodiments, the electrolyte may further include vinylene carbonate, and/or an ethylene carbonate-based compound represented by Chemical Formula 2, as an additive for improving cycle life.

## Chemical Formula 2

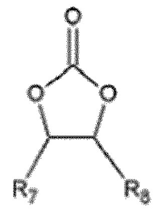

In Chemical Formula 2, $R_7$ and $R_8$ may each independently be the same or different and may each independently be hydrogen, a halogen, a cyano group (CN), a nitro group ($NO_2$), or a C1 to C5 fluoroalkyl group, provided that at least one of $R_7$ or $R_8$ is a halogen, a cyano group (CN), a nitro group ($NO_2$), or a C1 to C5 fluoroalkyl group, and $R_7$ and $R_8$ are not concurrently (e.g., simultaneously) hydrogens.

Non-limiting examples of the ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and/or the like. An amount of the additive for improving the cycle-life characteristics may be utilized within an appropriate or suitable range.

In one or more embodiments, the electrolyte may further include vinylethylene carbonate, propane sultone, succinonitrile, or one or more combinations thereof, and herein, the utilized amount may be suitably adjusted.

The lithium salt dissolved in a non-aqueous organic solvent supplies a rechargeable lithium battery with lithium ions, enables a basic operation of the rechargeable lithium battery, and improves transportation of the lithium ions between the positive and the negative electrodes. Non-limiting examples of the lithium salt may include one or two selected from among $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiF(SO_2)_2N$ (lithium

bis(fluorosulfonyl)imide: LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$, where x and y are natural numbers, for example integers of 1 to 20, lithium difluoro(bisoxalato) phosphate, LiCl, LiI, $LiB(C_2O_4)_2$ (lithium bis(oxalato) borate: LiBOB), and lithium difluoro(oxalato)borate (LiDFOB). A concentration of the lithium salt may be in a range of about 0.1 M to about 2.0 M. If (e.g., when) the lithium salt is included at the above concentration range, the electrolyte may have excellent or suitable performance and lithium ion mobility due to optimal or suitable electrolyte conductivity and viscosity.

In one or more embodiments, the rechargeable lithium battery may further include a separator between the negative electrode and the positive electrode, depending on a kind (or type) of the battery. Non-limiting examples of the separator may include polyethylene, polypropylene, polyvinylidene fluoride, and multi-layers having two or more layers thereof such as a polyethylene/polypropylene double-layered separator, a polyethylene/polypropylene/polyethylene triple-layered separator, and a polypropylene/polyethylene/polypropylene triple-layered separator.

FIG. 4 is an exploded perspective view of a rechargeable lithium battery according to one or more embodiments. The rechargeable lithium battery according to one or more embodiments is illustrated as a prismatic battery but is not limited thereto and may include variously-shaped batteries such as a cylindrical battery, a pouch battery, and/or the like.

Referring to FIG. 4, a rechargeable lithium battery 100 according to one or more embodiments may include an electrode assembly 40 manufactured by winding a separator 30 disposed between a positive electrode 10 and a negative electrode 20 and a case 50 housing the electrode assembly 40. An electrolyte may be impregnated in the positive electrode 10, the negative electrode 20, and the separator 30.

Hereinafter, examples of the present disclosure and comparative examples are described. These examples, however, are not in any sense to be interpreted as limiting the scope of the present disclosure.

**Example 1**

5 wt% of a Si-C composite, 91 wt% of artificial graphite, 2 wt% of an acrylic acid-acrylonitrile copolymer binder, and 2 wt% of a styrene-butadiene rubber were mixed in a water solvent to prepare a negative active material layer slurry with a viscosity of 3000 cps (at 25 °C). The viscosity was measured using a Brookfield Viscometer with LV4 Spindle at 30 rpm and a room temperature (25°C).

The acrylic acid-acrylonitrile copolymer included 44 wt% of acrylic acid and 56 wt% of acrylonitrile, and an aqueous solution in which the copolymer was added to water to have a solid content (e.g., amount) of 7 wt% had a viscosity of solution 1200 mPa·s (at 25 °C).

The Si-C composite included a silicon core and a soft carbon amorphous carbon layer on the surface of the core, and, based on a total weight, 100 wt%, of the Si-C composite, an amount of the silicon core was 60 wt% and an amount of the soft carbon amorphous carbon layer was 40 wt%. The silicon core was silicon nano particles with an average particle diameter D50 of 20 nm and the soft carbon amorphous carbon layer had an average thickness of 100 nm.

A Cu foil current collector was positioned on a magnet having a magnetic field strength of 6000 Gauss, while the Cu foil current collector was moved, the negative active material layer slurry was coated on the current collector to expose a magnetic field for 8 seconds, pressurized and dried at a high temperature of 100 °C or more to prepare a negative active material layer with a thickness of 80 μm, thereby obtaining a negative electrode.

96 wt% of a $LiCoO_2$ positive active material, 2 wt% of a carbon black conductive agent, and 2 wt% of a polyvinylidene fluoride binder were mixed in an N-methyl pyrrolidone solvent to prepare a positive active material slurry. The positive active material slurry was coated on an Al current collector, dried, and pressurized to prepare a positive electrode.

Utilizing the negative electrode, the positive electrode, and an electrolyte, a rechargeable lithium cell (full cell) was fabricated. The electrolyte was prepared by utilizing a mixed solvent of ethylene carbonate, ethylmethyl carbonate, and dimethyl carbonate (20:10:70 volume ratio) and dissolving 1.5 M $LiPF_6$ therein.

**Example 2**

5 wt% of the Si-C composite, 91 wt% of artificial graphite, 2 wt% of the acrylic acid-acrylonitrile copolymer binder, and 2 wt% of the styrene-butadiene rubber were mixed in a water solvent to prepare a negative active material layer slurry with a viscosity of 3200 cps (at 25 °C).

A Cu foil current collector was positioned on a magnet having a magnetic field strength of 6000 Gauss, while the Cu foil current collector was moved, the negative active material layer slurry was coated on the current collector to expose a magnetic field for 9 seconds, pressurized and dried to prepare a negative active material layer with a thickness of 80 μm, thereby obtaining a negative electrode.

Utilizing the negative electrode, and the positive electrode and the electrolyte utilized in Example 1, a rechargeable lithium cell was fabricated by substantially the same procedure as in Example 1.

**Example 3**

5 wt% of the Si-C composite, 91 wt% of artificial graphite, 2 wt% of the acrylic acid-acrylonitrile copolymer binder, and 2 wt% of the styrene-butadiene rubber were mixed in a water solvent to prepare a negative active material layer slurry with a viscosity of 3400 cps (at 25 °C).
A Cu foil current collector was positioned on a magnet having a magnetic field strength of 6000 Gauss, while the Cu foil current collector was moved, the negative active material layer slurry was coated on the current collector to expose a magnetic field for 10 seconds, pressurized and dried to prepare a negative active material layer with a thickness of 80 μm, thereby obtaining a negative electrode.
Utilizing the negative electrode, and the positive electrode and the electrolyte utilized in Example 1, a rechargeable lithium cell was fabricated by substantially the same procedure as in Example 1.

**Example 4**

5 wt% of the Si-C composite, 91 wt% of artificial graphite, 2 wt% of the acrylic acid-acrylonitrile copolymer binder, and 2 wt% of the styrene-butadiene rubber were mixed in a water solvent to prepare a negative active material layer slurry with a viscosity of 3300 cps (at 25 °C).
A Cu foil current collector was positioned on a magnet having a magnetic field strength of 6000 Gauss, while the Cu foil current collector was moved, the negative active material layer slurry was coated on the current collector to expose a magnetic field for 11 seconds, pressurized and dried to prepare a negative active material layer with a thickness of 80 μm, thereby obtaining a negative electrode.
Utilizing the negative electrode, and the positive electrode and the electrolyte utilized in Example 1, a rechargeable lithium cell was fabricated by substantially the same procedure as in Example 1.

**Example 5**

5 wt% of the Si-C composite, 91 wt% of artificial graphite, 2 wt% of the acrylic acid-acrylonitrile copolymer binder, and 2 wt% of the styrene-butadiene rubber were mixed in a water solvent to prepare a negative active material layer slurry with a viscosity of 3500 cps (at 25 °C).
A Cu foil current collector was positioned on a magnet having a magnetic field strength of 6000 Gauss, while the Cu foil current collector was moved, the negative active material layer slurry was coated on the current collector to expose a magnetic field for 12 seconds, pressurized and dried to prepare a negative active material layer with a thickness of 80 μm, thereby obtaining a negative electrode.
Utilizing the negative electrode, and the positive electrode and the electrolyte utilized in Example 1, a rechargeable lithium cell was fabricated by substantially the same procedure as in Example 1.

**Example 6**

5 wt% of the Si-C composite, 91.6 wt% of artificial graphite, 1.4 wt% of the acrylic acid-acrylonitrile copolymer binder, and 2 wt% of the styrene-butadiene rubber were mixed in a water solvent to prepare a negative active material layer slurry with a viscosity of 3500 cps (at 25 °C).
A Cu foil current collector was positioned on a magnet having a magnetic field strength of 6000 Gauss, while the Cu foil current collector was moved, the negative active material layer slurry was coated on the current collector to expose a magnetic field for 12 seconds, pressurized and dried to prepare a negative active material layer with a thickness of 80 μm, thereby obtaining a negative electrode.
Utilizing the negative electrode, and the positive electrode and the electrolyte utilized in Example 1, a rechargeable lithium cell was fabricated by substantially the same procedure as in Example 1.

**Comparative Example 1**

5 wt% of the Si-C composite, 91 wt% of artificial graphite, 2 wt% of the acrylic acid-acrylonitrile copolymer binder, and 2 wt% of the styrene-butadiene rubber were mixed in a water solvent to prepare a negative active material layer slurry with a viscosity of 3000 cps (at 25 °C).
The negative active material layer slurry was coated on a Cu foil current collector and dried to prepare a negative active material layer with a thickness of 80 μm, thereby obtaining a negative electrode.
Utilizing the negative electrode, and the positive electrode and the electrolyte utilized in Example 1, a rechargeable lithium cell was fabricated by substantially the same procedure as in Example 1.

## Comparative Example 2

5 wt% of the Si-C composite utilized in Example 1, 91 wt% of artificial graphite, 2 wt% of polyacrylic acid, and 2 wt% of the styrene-butadiene rubber were mixed in a water solvent to prepare a negative active material layer slurry with a viscosity of 3500 cps (at 25 °C).
A Cu foil current collector was positioned on a magnet having a magnetic field strength of 6000 Gauss, while the Cu foil current collector was moved, the negative active material layer slurry was coated on the current collector to expose a magnetic field for 5 seconds, pressurized and dried to prepare a negative active material layer with a thickness of 80 μm, thereby obtaining a negative electrode.
Utilizing the negative electrode, and the positive electrode and the electrolyte utilized in Example 1, a rechargeable lithium cell was fabricated by substantially the same procedure as in Example 1.

## Comparative Example 3

5 wt% of the Si-C composite utilized in Example 1, 91 wt% of artificial graphite, 2 wt% of polyacrylic acid, and 2 wt% of the styrene-butadiene rubber were mixed in a water solvent to prepare a negative active material layer slurry with a viscosity of 3500 cps (at 25 °C).
A Cu foil current collector was positioned on a magnet having a magnetic field strength of 6000 Gauss, while the Cu foil current collector was moved, the negative active material layer slurry was coated on the current collector to expose a magnetic field for 8 seconds, pressurized and dried to prepare a negative active material layer with a thickness of 80 μm, thereby obtaining a negative electrode.
Utilizing the negative electrode, and the positive electrode and the electrolyte utilized in Example 1, a rechargeable lithium cell was fabricated by substantially the same procedure as in Example 1.

## Comparative Example 4

5 wt% of the Si-C composite utilized in Example 1, 91 wt% of artificial graphite, 2 wt% of polyacrylic acid, and 2 wt% of the styrene-butadiene rubber were mixed in a water solvent to prepare a negative active material layer slurry with a viscosity of 3300 cps (at 25 °C).
A Cu foil current collector was positioned on a magnet having a magnetic field strength of 6000 Gauss, while the Cu foil current collector was moved, the negative active material layer slurry was coated on the current collector to expose a magnetic field for 9 seconds, pressurized and dried to prepare a negative active material layer with a thickness of 80 μm, thereby obtaining a negative electrode.
Utilizing the negative electrode, and the positive electrode and the electrolyte utilized in Example 1, a rechargeable lithium cell was fabricated by substantially the same procedure as in Example 1.

## Comparative Example 5

5 wt% of the Si-C composite utilized in Example 1, 91 wt% of artificial graphite, 2 wt% of polyacrylic acid, and 2 wt% of the styrene-butadiene rubber were mixed in a water solvent to prepare a negative active material layer slurry with a viscosity of 3250 cps (at 25 °C).
A Cu foil current collector was positioned on a magnet having a magnetic field strength of 6000 Gauss, while the Cu foil current collector was moved, the negative active material layer slurry was coated on the current collector to expose a magnetic field for 10 seconds, pressurized and dried to prepare a negative active material layer with a thickness of 80 μm, thereby obtaining a negative electrode.
Utilizing the negative electrode, and the positive electrode and the electrolyte utilized in Example 1, a rechargeable lithium cell was fabricated by substantially the same procedure as in Example 1.

## Comparative Example 6

5 wt% of the Si-C composite utilized in Example 1, 91 wt% of artificial graphite, 2 wt% of polyacrylic acid, and 2 wt% of the styrene-butadiene rubber were mixed in a water solvent to prepare a negative active material layer slurry with a viscosity of 3300 cps (at 25 °C)
A Cu foil current collector was positioned on a magnet having a magnetic field strength of 6000 Gauss, while the Cu foil current collector was moved, the negative active material slurry was coated on the current collector to expose a magnetic field for 11 seconds, pressurized and dried to prepare a negative active material layer with a thickness of 80 μm, thereby obtaining a negative electrode.
Utilizing the negative electrode, and the positive electrode and the electrolyte utilized in Example 1, a rechargeable lithium cell was fabricated by substantially the same procedure as in Example 1.

**Comparative Example 7**

5 wt% of the Si-C composite utilized in Example 1, 91 wt% of artificial graphite, 2 wt% of polyacrylic acid, and 2 wt% of the styrene-butadiene rubber were mixed in a water solvent to prepare a negative active material layer slurry with a viscosity of 3250 cps (at 25 °C).

A Cu foil current collector was positioned on a magnet having a magnetic field strength of 6000 Gauss, while the Cu foil current collector was moved, the negative active material layer slurry was coated on the current collector to expose a magnetic field for 12 seconds, pressurized and dried at a high temperature of 100 °C or more to prepare a negative active material layer with a thickness of 80 μm, thereby obtaining a negative electrode.

Utilizing the negative electrode, and the positive electrode and the electrolyte utilized in Example 1, a rechargeable lithium cell was fabricated by substantially the same procedure as in Example 1.

**Comparative Example 8**

5 wt% of the Si-C composite utilized in Example 1, 91 wt% of artificial graphite, and 4 wt% of carboxymethyl cellulose (CMC) were mixed in a water solvent to prepare a negative active material layer slurry with a viscosity of 3500 cps (at 25 °C).

A Cu foil current collector was positioned on a magnet having a magnetic field strength of 6000 Gauss, while the Cu foil current collector was moved, the negative active material layer slurry was coated on the current collector to expose a magnetic field for 5 seconds, pressurized and dried to prepare a negative active material layer with a thickness of 80 μm, thereby obtaining a negative electrode.

Utilizing the negative electrode, and the positive electrode and the electrolyte utilized in Example 1, a rechargeable lithium cell was fabricated by substantially the same procedure as in Example 1.

**Comparative Example 9**

5 wt% of the Si-C composite utilized in Example 1, 91 wt% of artificial graphite, and 4 wt% of carboxymethyl cellulose were mixed in a water solvent to prepare a negative active material layer slurry with a viscosity of 3300 cps (at 25 °C).

A Cu foil current collector was positioned on a magnet having a magnetic field strength of 6000 Gauss, while the Cu foil current collector was moved, the negative active material layer slurry was coated on the current collector to expose a magnetic field for 8 seconds, pressurized and dried to prepare a negative active material layer with a thickness of 80 μm, thereby obtaining a negative electrode.

Utilizing the negative electrode, and the positive electrode and the electrolyte utilized in Example 1, a rechargeable lithium cell was fabricated by substantially the same procedure as in Example 1.

**Comparative Example 10**

5 wt% of the Si-C composite utilized in Example 1, 91 wt% of artificial graphite, and 4 wt% of carboxymethyl cellulose were mixed in a water solvent to prepare a negative active material layer slurry with a viscosity of 3150 cps (at 25 °C).

A Cu foil current collector was positioned on a magnet having a magnetic field strength of 6000 Gauss, while the Cu foil current collector was moved, the negative active material layer slurry was coated on the current collector to expose a magnetic field for 9 seconds, pressurized and dried to prepare a negative active material layer with a thickness of 80 μm, thereby obtaining a negative electrode.

Utilizing the negative electrode, and the positive electrode and the electrolyte utilized in Example 1, a rechargeable lithium cell was fabricated by substantially the same procedure as in Example 1.

**Comparative Example 11**

5 wt% of the Si-C composite utilized in Example 1, 91 wt% of artificial graphite, and 4 wt% of carboxymethyl cellulose were mixed in a water solvent to prepare a negative active material layer slurry with a viscosity of 3100 cps (at 25 °C).

A Cu foil current collector was positioned on a magnet having a magnetic field strength of 6000 Gauss, while the Cu foil current collector was moved, the negative active material layer slurry was coated on the current collector to expose a magnetic field for 10 seconds, pressurized and dried to prepare a negative active material layer with a thickness

of 80 μm, thereby obtaining a negative electrode.

Utilizing the negative electrode, and the positive electrode and the electrolyte utilized in Example 1, a rechargeable lithium cell was fabricated by substantially the same procedure as in Example 1.

**Comparative Example 12**

5 wt% of the Si-C composite utilized in Example 1, 91 wt% of artificial graphite, and 4 wt% of carboxymethyl cellulose were mixed in a water solvent to prepare a negative active material layer slurry with a viscosity of 3120 cps (at 25 °C).

A Cu foil current collector was positioned on a magnet having a magnetic field strength of 6000 Gauss, while the Cu foil current collector was moved, the negative active material layer slurry was coated on the current collector to expose a magnetic field for 11 seconds, pressurized and dried to prepare a negative active material layer with a thickness of 80 μm, thereby obtaining a negative electrode.

Utilizing the negative electrode, and the positive electrode and the electrolyte utilized in Example 1, a rechargeable lithium cell was fabricated by substantially the same procedure as in Example 1.

**Comparative Example 13**

5 wt% of the Si-C composite utilized in Example 1, 91 wt% of artificial graphite, and 4 wt% of carboxymethyl cellulose were mixed in a water solvent to prepare a negative active material layer slurry with a viscosity of 3050 cps (at 25 °C).

A Cu foil current collector was positioned on a magnet having a magnetic field strength of 6000 Gauss, while the Cu foil current collector was moved, the negative active material layer slurry was coated on the current collector to expose a magnetic field for 12 seconds, pressurized and dried to prepare a negative active material layer with a thickness of 80 μm, thereby obtaining a negative electrode.

Utilizing the negative electrode, and the positive electrode and the electrolyte utilized in Example 1, a rechargeable lithium cell was fabricated by substantially the same procedure as in Example 1.

**Comparative Example 14**

5 wt% of the Si-C composite utilized in Example 1, 91 wt% of artificial graphite, 2 wt% of the acrylic acid-acrylonitrile copolymer binder, and 2 wt% of the styrene-butadiene rubber were mixed in a water solvent to prepare a negative active material layer slurry with a viscosity of 3250 cps (at 25 °C).

A Cu foil current collector was positioned on a magnet having a magnetic field strength of 6000 Gauss, while the Cu foil current collector was moved, the negative active material layer slurry was coated on the current collector to expose a magnetic field for 5 seconds, pressurized and dried to prepare a negative active material layer with a thickness of 80 μm, thereby obtaining a negative electrode.

Utilizing the negative electrode, and the positive electrode and the electrolyte utilized in Example 1, a rechargeable lithium cell was fabricated by substantially the same procedure as in Example 1.

**Reference Example 1**

A negative active material layer slurry with a viscosity of 3500 cps (at 25 °C) prepared by substantially the same procedure as in Example 1, except that 5 wt% of the Si-C composite, 92.3 wt% of artificial graphite, 0.7 wt% of the acrylic acid-acrylonitrile copolymer, and 2.0 wt% of the styrene-butadiene rubber were mixed in a water solvent.

A Cu foil current collector was positioned on a magnet having a magnetic field strength of 6000 Gauss, while the Cu foil current collector was moved, the negative active material layer slurry was coated on the current collector to expose a magnetic field for 12 seconds, pressurized and dried at a high temperature of 100 °C or more to prepare a negative active material layer with a thickness of 80 μm, thereby obtaining a negative electrode.

Utilizing the negative electrode, and the positive electrode and the electrolyte utilized in Example 1, a rechargeable lithium cell was fabricated by substantially the same procedure as in Example 1.

**Experimental Example 1) Measurement of X-ray diffraction characteristic**

The rechargeable lithium cells according to Examples 1 to 6, Comparative Examples 1 to 14, and Reference Example 1 were each charged and discharged at 0.1 C twice, and fully discharged at 0.1 C to 2.75 V. The fully-discharged battery cells were each disassembled to obtain the negative electrode. As for each of these negative electrodes, X'Pert (PANalytical B.V.) XRD equipment utilizing a Cu Kα ray as a target ray was utilized, but monochromator equipment was

removed in order to improve a peak intensity resolution, and then an XRD was measured. The measurement was performed under a condition of 2θ = 10° to 80°, a scan speed (°/s) = 0.06436, and a step size of 0.026°/step.

From the measured XRD results, the DD value of each layer was calculated, and the results are shown in Table 1.

Among the XRD results, the integral areas of the peaks shown at 2θ = 26.5±0.2° ((002) plane), 42.4±0.2° ((100) plane), 43.4±0.2° ((101) R plane), 44.6±0.2° ((101) H plane), 54.7±0.2° ((004) plane), and 77.5±0.2° ((110) plane) were measured, and the area sum of peaks shown at 2θ = 42.4±0.2° ((100) plane), 43.4±0.2° ((101)R plane), 44.6±0.2° ((101)H plane), and 77.5±0.2° ((110) plane) as $I_a$, and the area sum of peaks shown at 2θ =26.5±0.2° ((002) plane), 42.4±0.2° ((100) plane), 43.4±0.2° ((101)R plane), 44.6±0.2° ((101)H plane), 54.7±0.2° ((004) plane), and 77.5±0.2° ((110) plane) as $I_{total}$, and DD ($I_a/I_{total}$) was obtained by calculating from the values.

The binder type or kind, the slurry viscosity, and the condition for applying magnetic field in Examples 1 to 6, Comparative Examples 1 to 14, and Reference Example 1 were summarized in Table 1. In Table 1, P(AA-AN) indicates an acrylic acid-acrylonitrile copolymer, SBR indicates a styrene-butadiene rubber, PAA indicates an acrylic acid, and CMS indicates carboxymethyl cellulose.

Table 1

| | Binder type or kind | Slurry viscosity (cps) | Magnetic field strength (Gauss) | Exposure time (second) | DD |
|---|---|---|---|---|---|
| Example 1 | P(AA-AN) /SBR | 3000 | 6000 | 8 | 35 |
| Example 2 | P(AA-AN) /SBR | 3200 | 6000 | 9 | 37 |
| Example 3 | P(AA-AN) /SBR | 3400 | 6000 | 10 | 41 |
| Example 4 | P(AA-AN) /SBR | 3300 | 6000 | 11 | 46 |
| Example 5 | P(AA-AN) /SBR | 3500 | 6000 | 12 | 50 |
| Example 6 | P(AA-AN) /SBR | 3500 | 6000 | 12 | 51 |
| Comparative Example 1 | P(AA-AN) /SBR | 3000 | X | X | X |
| Comparative Example 2 | PAA/SBR | 3500 | 6000 | 5 | 22 |
| Comparative Example 3 | PAA/SBR | 3500 | 6000 | 8 | 35 |
| Comparative Example 4 | PAA/SBR | 3300 | 6000 | 9 | 37 |
| Comparative Example 5 | PAA/SBR | 3250 | 6000 | 10 | 41 |
| Comparative Example 6 | PAA/SBR | 3300 | 6000 | 11 | 46 |
| Comparative Example 7 | PAA/SBR | 3250 | 6000 | 12 | 50 |
| Comparative Example 8 | CMC | 3500 | 6000 | 5 | 22 |
| Comparative Example 9 | CMC | 3300 | 6000 | 8 | 35 |
| Comparative Example 10 | CMC | 3150 | 6000 | 9 | 37 |

(continued)

| | Binder type or kind | Slurry viscosity (cps) | Magnetic field strength (Gauss) | Exposure time (second) | DD |
|---|---|---|---|---|---|
| Comparative Example 11 | CMC | 3100 | 6000 | 10 | 41 |
| Comparative Example 12 | CMC | 3120 | 6000 | 11 | 46 |
| Comparative Example 13 | CMC | 3050 | 6000 | 12 | 50 |
| Comparative Example 14 | P(AA-AN) /SBR | 3250 | 6000 | 5 | 24 |
| Reference Example 1 | P(AA-AN) /SBR | 3500 | 6000 | 12 | 51 |

**Experimental Example 2) Evaluation of the thickness of the negative electrode**

The initial thicknesses for the negative electrodes according to Examples 1 to 6, Comparative Examples 1 to 14, and Reference Example 1 were each measured. Furthermore, the rechargeable lithium cells according to Examples 1 to 6 and Comparative Examples 1 to 14 were each charged under a SOC30 (charged to be 30% of charge capacity based on 100% of entire battery charge capacity), the negative electrode was disassembled from the cell, and then the thickness of the negative electrode was measured.

The thickness expansion of the negative electrode was measured by Equation 2. The results are shown in Table 2, as thickness increase rate.

## Equation 2

$$\text{Thickness expansion rate (\%)}=\{(\text{thickness after charging and discharging}-\text{initial thickness})/\text{initial thickness}\}*100$$

Table 2

| | DD | Thickness increase rate (%) |
|---|---|---|
| Example 1 | 35 | 20.1 |
| Example 2 | 37 | 19.5 |
| Example 3 | 41 | 18.2 |
| Example 4 | 46 | 17.3 |
| Example 5 | 50 | 17.2 |
| Example 6 | 51 | 17.3 |
| Comparative Example 1 | X | 21.5 |
| Comparative Example 2 | 22 | 22.3 |
| Comparative Example 3 | 35 | 21.2 |
| Comparative Example 4 | 37 | 20.6 |
| Comparative Example 5 | 41 | 19.0 |
| Comparative Example 6 | 46 | 18.4 |
| Comparative Example 7 | 50 | 18.3 |

(continued)

| | DD | Thickness increase rate (%) |
|---|---|---|
| Comparative Example 8 | 22 | 22.6 |
| Comparative Example 9 | 35 | 21.4 |
| Comparative Example 10 | 37 | 20.2 |
| Comparative Example 11 | 41 | 19.4 |
| Comparative Example 12 | 46 | 18.3 |
| Comparative Example 13 | 50 | 18.6 |
| Comparative Example 14 | 24 | 21 |
| Reference Example 1 | 51 | Separation (unable to measure) |

As shown in Table 2, when the Examples and the Comparative Examples having the same DD values are compared, the thickness increase rate of the Example is low.

Examples 1 to 6 utilizing the P(AA-AN) copolymer binder each had the DD value of 30 or more and exhibited a low thickness increase rate.

Whereas, Comparative Example 1 in which the P(AA-AN) copolymer binder was utilized, but the magnetic field was not applied, exhibited a high thickness increase rate, and Comparative Example 2 in which the magnetic field was applied, but the PAA binder was utilized, had the DD value of less than 30 and exhibited a high thickness increase rate.

Comparative Examples 3 and 4 had the DD value of 30 or more, but utilized the PAA binder, each exhibited a slightly high thickness increase rate.

Comparative Examples 8 and 14 utilizing the CMC binder or the P(AA-AN) binder, but had the DD value of less than 30, each exhibited a high thickness increase rate.

Reference Example 1 had the DD value of 51, but utilized the P(AA-AN) binder of 0.7 wt% which was too small amount, resulting in low adhesion, and thus, the separation was occurred during charge and discharge, making it impossible to measure the thickness increase rate.

**Experimental Example 3) Evaluation of separation or not**

The rechargeable lithium cells according to Examples 1 to 6, Comparative Examples 1 to 14, and Reference Example 1 were each formation charged and discharged at 0.1 C once, and then the cells were disassembled. Among these results, the image of the cell according to Example 6 is shown in FIG. 5 and the image of the cell according to Reference Example 1 is shown in FIG. 6.

As shown in FIG. 5 and FIG. 6, Example 6 exhibited that the negative active material layer was well or substantially adhered to the current collector even after charging and discharging, whereas Reference Example 1 exhibited that the negative active material layer was mostly or substantially detached from the current collector.

As utilized herein, the terms "substantially," "about," or similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC

chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While the present disclosure has been described in connection with what is presently considered to be practical example embodiments, it is to be understood that the present disclosure is not limited to the disclosed embodiments, but, on the contrary, is intended to cover one or more suitable modifications and equivalent arrangements included within the scope of the appended claims and equivalents thereof. Therefore, the aforementioned embodiments should be understood to be mere examples but not limiting the present disclosure in any way.

## Claims

**1.** A negative electrode for a rechargeable lithium battery, the negative electrode comprising:

a current collector; and
a negative active material layer on the current collector and comprising a copolymer binder, a Si-C composite first negative active material, and a crystalline carbon second negative active material,
wherein,
the copolymer binder comprises a first repeating unit derived from a (meth)acrylic acid-based monomer and a second repeating unit derived from a (meth)acrylonitrile monomer, and
a DD (Degree of Divergence) value, defined by Equation 1, of the negative electrode is about 30 or more.

Equation 1

$$DD\ (\text{Degree of Divergence}) = (I_a/I_{total}) * 100,$$

wherein,
$I_a$ is a sum of peak intensities at $2\theta = 42.4\pm0.2°$, $43.4\pm0.2°$, $44.6\pm0.2°$, $77.5\pm 0.2°$ measured by X-Ray diffraction (XRD) utilizing a Cu K$\alpha$ ray, and
$I_{total}$ is a sum of peak intensities at $2\theta = 26.5\pm0.2°$, $42.4\pm0.2°$, $43.4\pm0.2°$, $44.6\pm 0.2°$, $54.7\pm0.2°$, $77.5\pm0.2°$ measured by XRD utilizing a Cu K$\alpha$ ray.

**2.** The negative electrode for a rechargeable lithium battery, as claimed in claim 1, wherein the DD value of the negative electrode is about 30 to about 60.

**3.** The negative electrode for a rechargeable lithium battery, as claimed in claim 1 or claim 2, wherein an amount of the first repeating unit derived from the (meth)acrylic acid-based monomer is about 35 wt% to about 65 wt% based on an amount, 100 wt%, of the copolymer binder.

**4.** The negative electrode for a rechargeable lithium battery, as claimed in any one of claims 1 to 3, wherein an amount of the second repeating unit derived from the (meth)acrylonitrile monomer is about 35 wt% to about 65 wt% based on an amount, 100 wt%, of the copolymer binder.

**5.** The negative electrode for a rechargeable lithium battery, as claimed in any one of claims 1 to 4, wherein the copolymer binder further comprises a third repeating unit derived from an additional monomer which is capable of copolymerizing with the (meth)acrylic acid-based monomer and/or the (meth)acrylonitrile monomer, optionally wherein an amount of the third repeating unit is more than 0 wt% and about 20 wt% or less based on an amount, 100 wt%, of the copolymer binder.

**6.** The negative electrode for a rechargeable lithium battery, as claimed in any one of claims 1 to 4, wherein the

copolymer binder is a copolymer of acrylic acid and acrylonitrile.

**7.** The negative electrode for a rechargeable lithium battery, as claimed in any one of claims 1 to 6, wherein an amount of the copolymer binder is about 0.5 wt% to about 5 wt% based on a total weight, 100 wt%, of the negative active material layer.

**8.** The negative electrode for a rechargeable lithium battery, as claimed in any one of claims 1 to 7, wherein an amount of the Si is about 1 wt% to about 20 wt% based on a total amount, 100 wt%, of the Si-C composite first negative active material and the crystalline carbon second negative active material.

**9.** The negative electrode for a rechargeable lithium battery, as claimed in any one of claims 1 to 7, wherein an amount of the Si is about 3 wt% to about 20 wt% based on a total amount, 100 wt%, of the Si-C composite first negative active material and the crystalline carbon second negative active material.

**10.** The negative electrode for a rechargeable lithium battery, as claimed in any one of claims 1 to 9, wherein:

(i) a mixing ratio of the Si-C composite first negative active material to the crystalline carbon second negative active material is about 3:97 to about 10:90 by a weight ratio; and/or
(ii) the negative active material layer has a thickness of about 10 $\mu$m to about 100 $\mu$m.

**11.** The negative electrode for a rechargeable lithium battery, as claimed in any one of claims 1 to 10, wherein:

(i) the peak intensity is a peak integral area value; and/or
(ii) the copolymer binder has a viscosity of about 500 mPa·s to about 3000 mPa· s in an aqueous solution with a solid amount of about 7 wt%.

**12.** The negative electrode for a rechargeable lithium battery, as claimed in any one of claims 1 to 11, wherein:

(i) the crystalline carbon second negative active material is irregularly shaped, sheet-shaped, flake-shaped, spherically-shaped, or fiber-shaped artificial graphite or natural graphite, or a combination thereof; and/or
(ii) the Si-C composite first negative active material comprises Si and a carbon-based material.

**13.** The negative electrode for a rechargeable lithium battery, as claimed in any one of claims 1 to 12, wherein the negative electrode is prepared by arranging a magnet beneath the current collector; coating a negative active material layer composition comprising the Si-C composite first negative active material and the crystalline carbon second negative active material on the current collector; and drying the coated negative active material layer composition, and
the magnet has strength of a magnetic field in a range of about 1000 Gauss to about 10000 Gauss.

**14.** The negative electrode for a rechargeable lithium battery, as claimed in claim 13, wherein:

(i) after the coating of the negative active material layer composition, the coated negative active material layer composition is expose to the magnetic field for about 3 seconds to about 15 seconds; and/or
(ii) the negative active material layer composition has a viscosity of about 2000 cps to about 4000 cps at a room temperature.

**15.** A rechargeable lithium battery, comprising:

the negative electrode as claimed in claim 1 to claim 14;
a positive electrode comprising a positive active material; and
a non-aqueous electrolyte.

FIG. 1

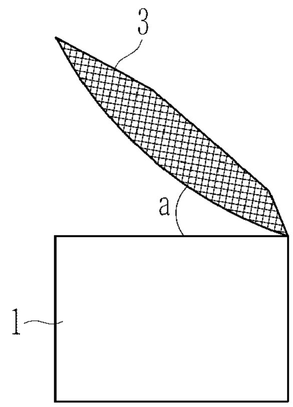

FIG. 2

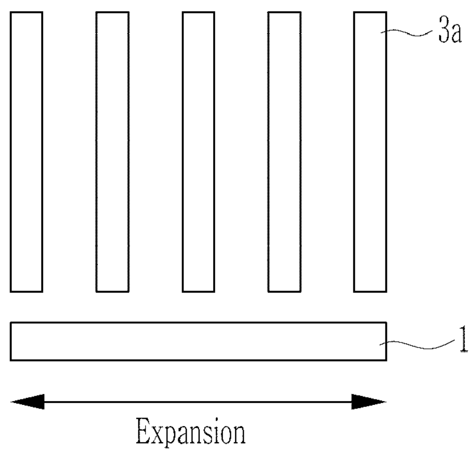

FIG. 3

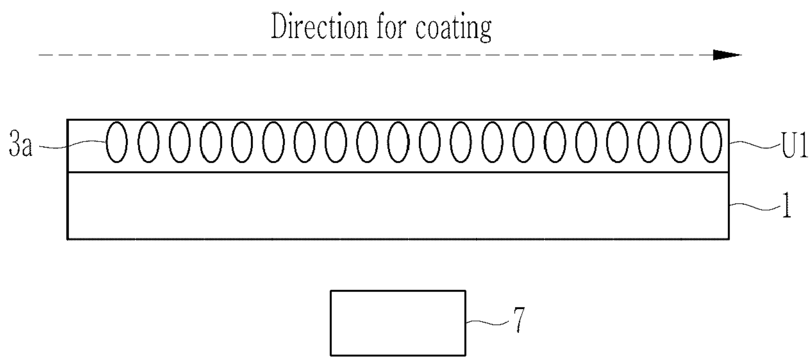

FIG. 4

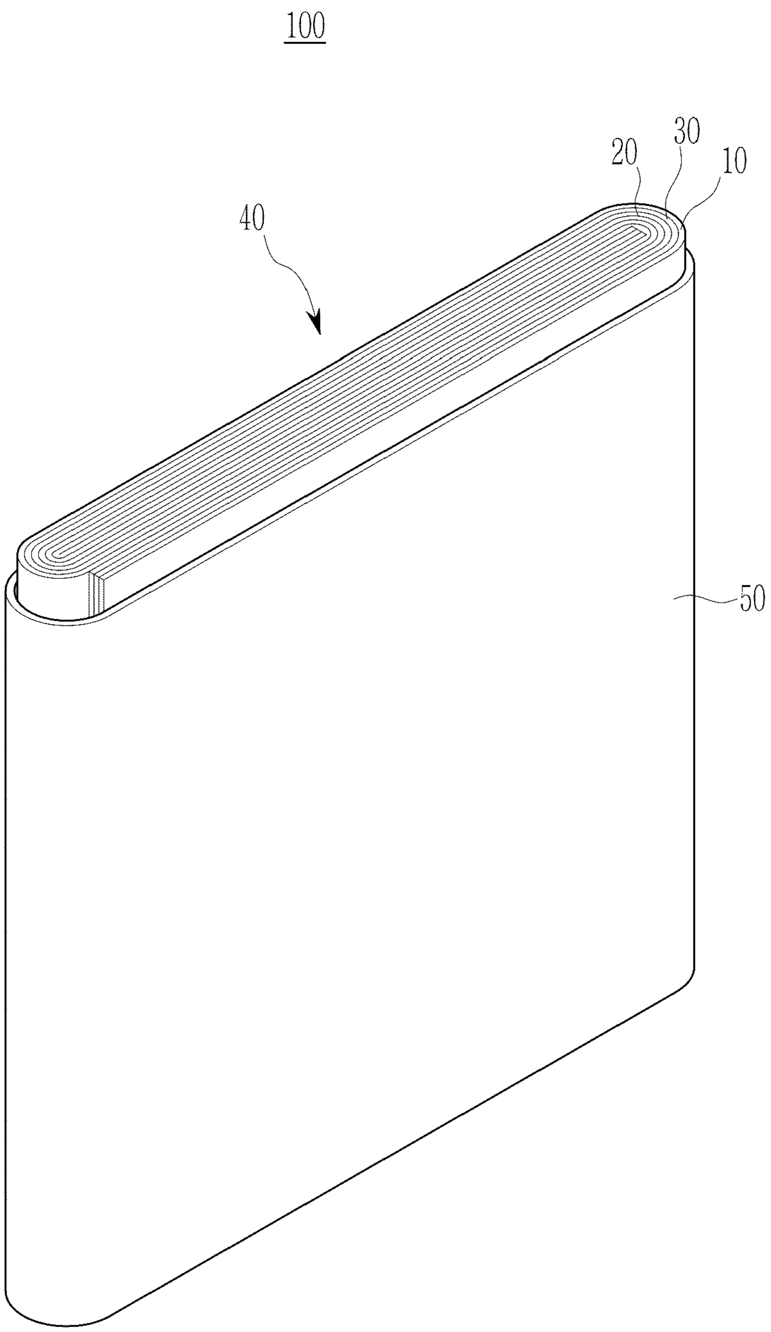

FIG. 5

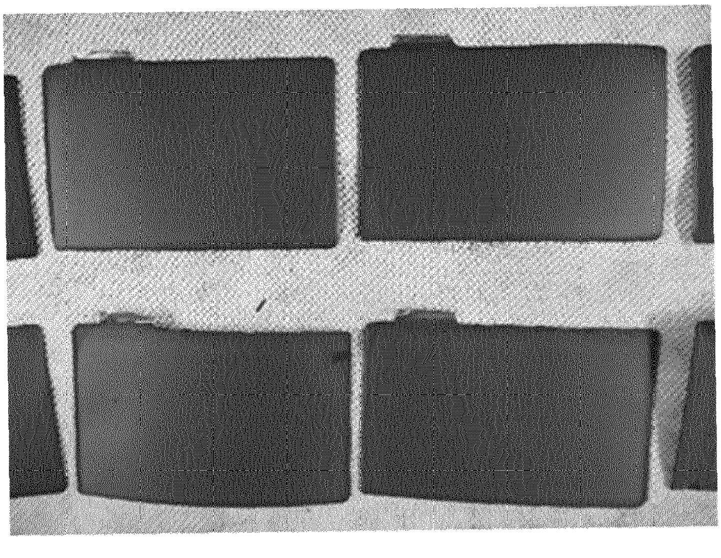

FIG. 6

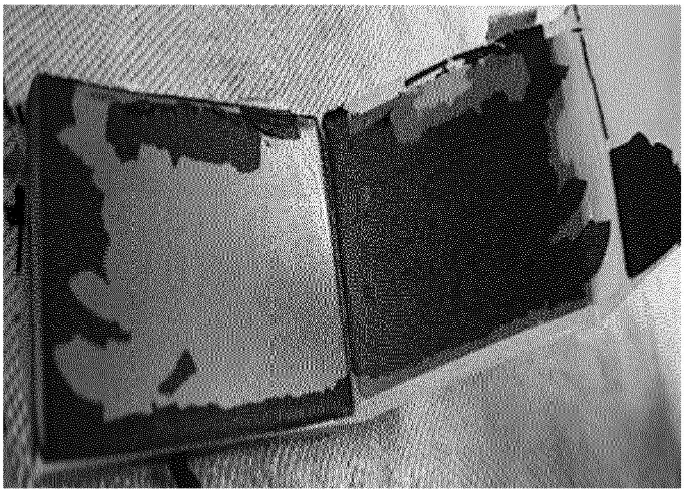

Europäisches Patentamt
European Patent Office
Office européen des brevets

# EUROPEAN SEARCH REPORT

Application Number
EP 24 16 1592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2022 0067254 A (SAMSUNG SDI CO LTD [KR]) 24 May 2022 (2022-05-24)<br>* examples preparation example 1, example 1 *<br>* paragraphs [0076] - [0078], [0093] - [0098] *<br>----- | 1-5,7, 11-15 | INV.<br>H01M4/13<br>H01M4/36<br>H01M4/62<br>H01M10/0525<br><br>ADD.<br>H01M4/38<br>H01M4/587 |
| X | US 2023/116454 A1 (LEE JUNGMIN [KR] ET AL) 13 April 2023 (2023-04-13)<br>* example 1 *<br>* paragraphs [0111] - [0119] *<br>----- | 1,2,6-15 | |
| X | US 2022/115665 A1 (FUKATANI TOMOYUKI [JP] ET AL) 14 April 2022 (2022-04-14)<br>* example 1 *<br>* paragraphs [0123] - [0130] *<br>----- | 1,2,6-15 | |
| X | JP 2022 064465 A (SAMSUNG SDI CO LTD) 26 April 2022 (2022-04-26)<br>* example 1 *<br>* paragraphs [0059] - [0069] *<br>----- | 1-4,6-15 | TECHNICAL FIELDS SEARCHED (IPC)<br><br>H01M |

The present search report has been drawn up for all claims

1

| Place of search | Date of completion of the search | Examiner |
|---|---|---|
| The Hague | 30 July 2024 | Agra-Gutierrez, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 16 1592

This annex lists the patent family members relating to the patent documents cited in the above-mentioned European search report. The members are as contained in the European Patent Office EDP file on The European Patent Office is in no way liable for these particulars which are merely given for the purpose of information.

30-07-2024

| Patent document cited in search report | Publication date | Patent family member(s) | Publication date |
|---|---|---|---|
| KR 20220067254 A | 24-05-2022 | NONE | |
| US 2023116454 A1 | 13-04-2023 | CN 116830293 A | 29-09-2023 |
| | | EP 4258381 A1 | 11-10-2023 |
| | | KR 20230050075 A | 14-04-2023 |
| | | US 2023116454 A1 | 13-04-2023 |
| | | WO 2023059108 A1 | 13-04-2023 |
| US 2022115665 A1 | 14-04-2022 | CN 114430028 A | 03-05-2022 |
| | | EP 3985758 A1 | 20-04-2022 |
| | | US 2022115665 A1 | 14-04-2022 |
| | | US 2024030446 A1 | 25-01-2024 |
| JP 2022064465 A | 26-04-2022 | JP 2022064465 A | 26-04-2022 |
| | | KR 20220049447 A | 21-04-2022 |

EPO FORM P0459

For more details about this annex : see Official Journal of the European Patent Office, No. 12/82